# EUROPEAN PATENT APPLICATION

(11) **EP 4 752 971 A1**
(43) Date of publication of application: **03.06.2026**
(21) Application number: 25772288.4
(22) Date of filing: 11.03.2025
(51) Int. Cl.: H01M 4/36, H01M 4/583, H01M 4/38, H01M 10/0525, H01M 4/48, H01M 4/133, H01M 4/131, H01M 10/058, H01M 10/0562, C01B 32/05

(54) **NEGATIVE ELECTRODE MATERIAL COMPRISING MG(O)/C COMPOSITE, NEGATIVE ELECTRODE, LITHIUM-ION SECONDARY BATTERY, AND METHOD FOR MANUFACTURING MG(O)/C COMPOSITE**

(30) Priority: 12.03.2024 KR 20240034255
(71) Applicant: LG Energy Solution, Ltd., Seoul 07335 (KR)
(72) Inventor: JUNG, Yi Jin, Daejeon 34122 (KR); JUNG, Yun Chae, Yongin-si, Gyeonggi-do 16953 (KR); SONG, Min Sang, Daejeon 34122 (KR); YU, Ji Sang, Seongnam-si, Gyeonggi-do 13600 (KR); HWANG, Chi Hyun, Seoul 06203 (KR); JEON, Sang Jin, Seongnam-si, Gyeonggi-do 13438 (KR)
(74) Representative: Goddar, Heinz J.
(86) International application number: PCT/KR2025/099657
(87) International publication number: WO 2025/193043

(57) **Abstract**

The present invention provides a negative electrode material comprising a Mg(O)/C composite, which is a carbide of Mg-MOF-74 (magnesium-based metal-organic framework-74), wherein O is present or absent, a negative electrode comprising the negative electrode material, a lithium-ion secondary battery comprising the negative electrode, and a method for producing the Mg(O)/C composite.

## Description

### [Technical Field]

This application claims the benefit of priority to Korean Patent Application No. 10-2024-0034255, filed March 12, 2024, and Korean Patent Application No. 10-2025-0031510, filed March 11, 2025, the disclosures of which are incorporated herein by reference in their entirety.

The present invention relates to a negative electrode material comprising a Mg(O)/C composite, a negative electrode comprising the negative electrode material, a lithium-ion secondary battery comprising the negative electrode, and a method of producing the Mg(O)/C composite.

### [Related Art]

Recently, lithium-ion secondary batteries using solid-state electrolytes as electrolytes have gained attention. To improve the energy density of these lithium-ion secondary batteries, the use of lithium as the negative electrode active material has been proposed. Lithium's capacity density (capacity per unit weight) is about 10 times that of graphite, which is commonly used as a negative electrode active material. Therefore, when using lithium as a negative electrode active material, it is possible to thin out the lithium-ion secondary battery and increase the power output.

As lithium-ion secondary batteries, for example, anodeless lithium-ion secondary batteries comprising a negative electrode active material layer comprising a metal forming an alloy with lithium and a carbon material are known.

The anodeless lithium-ion secondary battery as described above is driven by a mechanism in which metallic lithium is deposited on the negative electrode active layer and between the negative electrode active layer and the current collector during charging, and the deposited metallic lithium is ionized and moves toward the positive electrode during discharging.

However, when using a negative electrode active layer as described above, lithium is deposited at the interface between the negative electrode active layer and the solid electrolyte layer, and dendrites in which the lithium grows toward the positive electrode active layer through the pores of the solid electrolyte layer are frequently formed.

Therefore, the development of negative electrode materials that can control the generation of such dendrites is required to improve the drive characteristics and life characteristics of batteries.

### [Prior Art Reference]

### [Patent Reference]

Korean Laid-open Patent Publication No. 10-2020-0052707

### [Detailed Description of the Invention]

### [Technical Problem]

The present invention aims to provide a negative electrode material, a negative electrode, and a lithium-ion secondary battery that can improve the drive characteristics and lifetime characteristics of battery.

Furthermore, the present invention aims to provide an efficient preparation method for Mg(O)/C composite having excellent performance as a negative electrode material.

### [Technical Solution]

To accomplish the above objectives, the present invention provides a negative electrode material comprising a Mg(O)/C composite, which is a carbide of Mg-MOF-74 (magnesium-based metal-organic framework-74), wherein O is present or absent.

The present invention also provides a negative electrode comprising a negative electrode active material layer comprising 35 to 60% by weight of the negative electrode material, 35 to 60% by weight of a conductive material, and 3 to 15% by weight of a binder.

The present invention also provides a lithium-ion secondary battery comprising a negative electrode; a positive electrode; and an electrolyte disposed between the negative electrode and positive electrode.

The present invention also provides a method of preparing a Mg(O)C composite, comprising:
a) preparing a solution by dissolving a magnesium precursor and 2,5-dihydroxyterephthalic acid in a solvent;
b) adjusting the pH of the solution to 9 to 11;
c) heat treating the solution at 110 to 140°C;
d) drying the solids produced after the heat treatment to prepare Mg-MOF-74; and
e) carbonizing the Mg-MOF-74 at 500 to 1000°C.

### [Advantageous Effects]

The negative electrode material, negative electrode, and lithium-ion secondary battery of the present invention comprise a Mg(O)/C composite, which improves the drive characteristics and life characteristics of the battery.

Furthermore, the method of preparing Mg(O)/C composite of the present invention provides an efficient method of preparing Mg(O)/C composite having excellent performance as a negative electrode material.

### [Brief Description of Drawing]

FIG. 1 is a schematic cross-sectional view of the structure of the lithium-ion secondary battery of the present invention.
FIG. 2 is a scanning electron microscopy image (a) and an energy-dispersive X-ray spectroscopy (EDS) image (b) of the Mg(O)/C composite of the present invention.

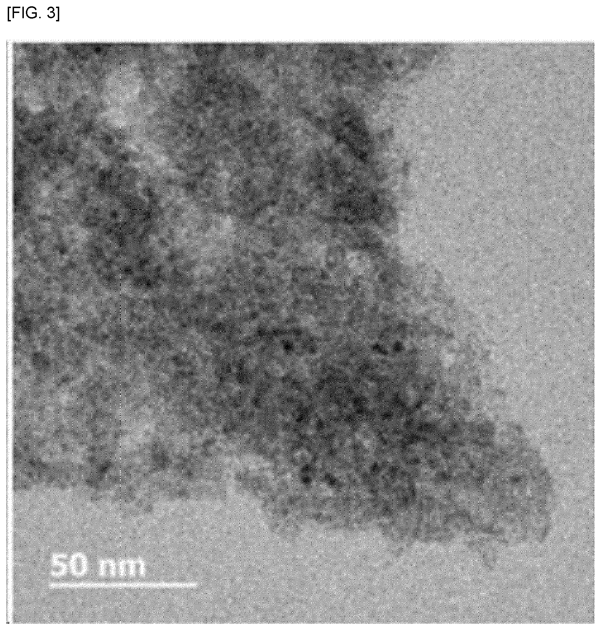

FIG. 3 is a transmission electron microscopy image of the Mg(O)/C composite of the present invention.
FIG. 4 is a graph of X-ray diffraction analysis results of Mg(O)/C composites prepared by the Examples and Comparative Example.
FIG. 5 is a graph showing the results of measuring the discharge capacity retention rate and charge/discharge efficiency of the lithium-ion secondary battery of Example 1 in Experimental Example 2.
FIG. 6 is a graph showing the results of confirming the activity of the Mg(O)/C composite in Experimental Example 3.
FIG. 7 is an SEM image showing the morphology of the Mg(O)/C composite depending on pH adjustment during the preparation of the Mg(O)/C composite.
FIGs. 8 and 9 are schematic cross-sectional views of the structure of the lithium-ion secondary battery of the present invention.

### [Best Mode]

Hereinafter, the present invention will be described in more detail to provide a better understanding of the present invention.

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention. Further, the terminology used herein is used to describe exemplary examples only and is not intended to limit the invention. Expressions in the singular include the plural unless the context clearly indicates otherwise.

When a component is referred to as being "connected to, comprised in, or installed on" another component, it should be understood that the component may be directly connected or installed on the other component, but that additional intervening component(s) may be present therebetween. On the other hand, when a component is referred to as being "directly connected to or installed on" another component, it should be understood that no other component may be present therebetween. Other expressions that describe relationships between components, such as "on top of" and "directly on top of", or "between" and "directly between", or "neighboring" and "directly neighboring", should be interpreted similarly.

As used herein, the term "combination" includes, unless otherwise specified, mixtures, alloys, reaction products, and the like.

The negative electrode material of the present invention comprises a Mg(O)/C composite, which is a carbide of Mg-MOF-74 (magnesium-based metal-organic framework-74). In the Mg(O)/C composite, O (oxygen) may or may not be present.

The Mg(O)/C composite has a structure comprising a mixture of crystallinity and amorphousness.

The Mg(O)/C composite improves the dispersibility between carbon and metal, and secures structural stability by the carbon matrix. It also can stabilize the interface between the solid electrolyte layer and the negative electrode active material layer through the decomposition of MgO during the operation of the battery.

In the Mg(O)/C composite, the weight ratio of Mg to C may be 1 : 0.5 to 10, more preferably 1 : 1 to 4.

In the Mg(O)/C composite, the weight ratio of MgO to C may be 1 : 0.25 to 5, more preferably 1 : 0.5 to 2.

When Mg and MgO are included together in the Mg(O)/C composite, the weight ratio thereof may be 1 : 0.25 to 8, more preferably 1 : 0.5 to 3.

The interatomic or interatomic and intermolecular weight ratios of the Mg(O)/C composite were determined by thermogravimetric analysis.

In the above, the particle size of the Mg(O)/C composite may be 10 nm to 10 um, preferably 50 nm to 1 um, more preferably 50 nm to 500 nm. The particle size can be measured using a particle size analyzer (manufacturer: Malvern).

The Mg-MOF-74 (metal-organic framework-74 (magnesium)) may have, for example, the following structure.

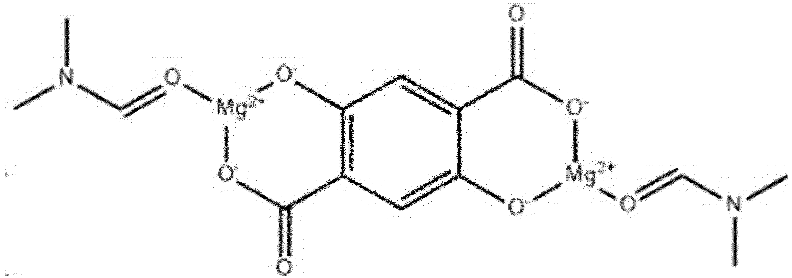

The present invention relates to a negative electrode comprising a negative electrode active material layer comprising 40 to 89% by weight of the negative electrode material, 10 to 50% by weight of a conductive material, and 1 to 10% by weight of a binder. The negative electrode material may comprise 100% by weight of Mg(O)/C composite, or may comprise 80 to 99% by weight of Mg(O)/C composite and 1 to 20% by weight of another material, such as a metal. Materials commonly known in the art can be used as other materials, such as a metal, without limitation.

The negative electrode active material layer may more preferably comprise 60 to 89% by weight negative electrode material, 10 to 35% by weight conductive material, and 1 to 7% by weight binder.

The negative electrode may include a negative electrode active material layer and a negative electrode current collector. The negative electrode active material layer can also be referred to as a protective layer in the sense that it protects the cell from dendrites.

The present invention also provides a lithium-ion secondary battery comprising a negative electrode; a positive electrode; and an electrolyte disposed between the negative electrode and positive electrode.

The electrolyte may preferably comprise, but is not limited to, a sulfide-based solid electrolyte.

The lithium-ion secondary battery may be an anodeless battery.

The present invention provides a method of preparing a Mg(O)/C composite, comprising the following steps:
a) preparing a solution by dissolving a magnesium precursor and 2,5-dihydroxyterephthalic acid in a solvent;
b) adjusting the pH of the solution to 9 to 11;
c) heat treating the solution at 110 to 140°C;
d) drying the solids produced after the heat treatment to prepare Mg-MOF-74; and
e) carbonizing the Mg-MOF-74 at 500 to 1000°C.

The magnesium precursor may be one or more selected from the group consisting of magnesium nitrate hexahydrate (Mg(NO₃)₂.6H₂O), magnesium nitrate dihydrate (Mg(NO₃)₂.2H₂O), magnesium nitrate (Mg(NO₃)₂), and magnesium hydroxide (Mg(OH)₂).

The 2,5-dihydroxyterephthalic acid may be used in an amount of 200 to 300 parts by weight based on 100 parts by weight of magnesium contained in the magnesium precursor. If the 2,5-dihydroxyterephthalic acid is used in an amount of less than 200 parts by weight, the magnesium may not fully react, and if it is used in an amount of more than 300 parts by weight, the residual amount of unreacted material increases, which may cause undesirable side reactions.

As the solvent, a solvent in which dimethylformamide, ethanol, and water are mixed in a volume ratio of 10 to 25:0.5 to 2:1 may be used, more preferably 15 to 20:0.7 to 1.5:1.

If the dimethylformamide is mixed with a volume ratio of less than 10, the size of Mg-MOF-74 may increase rapidly, and if it is mixed with a volume ratio of more than 25, the structure of Mg-MOF-74 may not develop, which is undesirable. In addition, if the ethanol is mixed with a weight ratio of below 0.5, the structure of Mg-MOF-74 may not develop, and if it is mixed with a weight ratio of above 2, the size of Mg-MOF-74 may increase rapidly, which is undesirable.

In step b), the pH of the solution can be adjusted to 9 to 11, preferably 9 to 10.5, more preferably 9.5 to 10. If the pH of the solution is below 9 or above 11, it is not desirable because Mg-MOF-74 is not synthesized.

The pH adjustment can be accomplished, for example, by adding a basic substance such as NaOH.

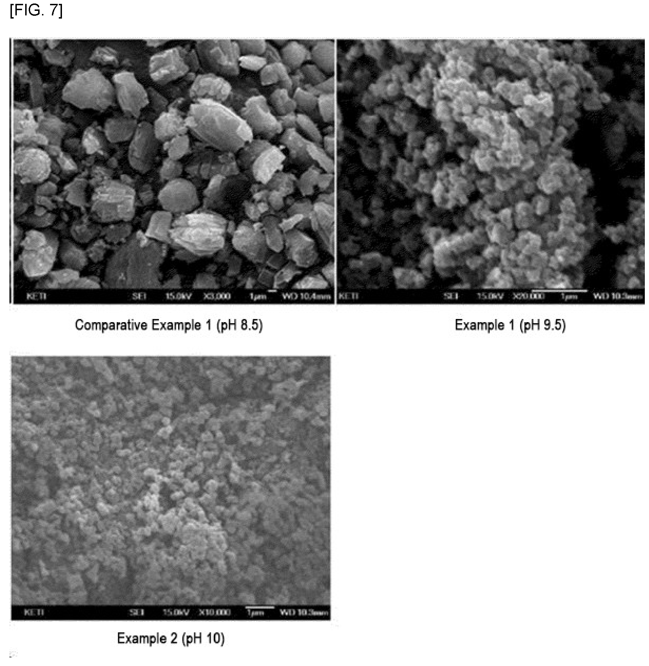

The pH adjustment leads to a decrease in the particle size of the Mg(O)/C composite, making it resemble non-graphitic carbon materials (see FIG. 7).

The heat treatment of step c) may be carried out at 110 to 140°C, preferably at 120 to 130°C. If the heat treatment is carried out at below 110°C, the reaction may not occur, and if it is carried out at above 140°C, a composite may not be uniformly formed due to a change in concentration caused by evaporation of the solvent, etc.

The heat treatment of step c) may be carried out for 18 to 30 hours, more preferably for 23 to 30 hours.

If the heat treatment time is less than 18 hours, the reaction may not be completed sufficiently, and if it exceeds 30 hours, the size of the Mg-MOF-74 increases, which is not desirable.

The solvent may be used in an amount of 30 to 300 times by weight based on the combined weight of the magnesium precursor and the 2,5-dihydroxyterephthalic acid, preferably 50 to 200 times by weight, more preferably 70 to 150 times by weight.

If the amount of solvent used is less than 30 times, the size of the Mg-MOF-74 may increase, and if it exceeds 300 times, it may be undesirable due to kinetic disadvantages in the reaction.

In step d), the solids may be obtained by introducing the heat-treated reaction mixture into the solvent to obtain a precipitate. For example, it can be obtained by introducing the reaction mixtures into methanol to produce a precipitate, and drying the precipitate. In this case, the drying may be carried out by vacuum drying.

The carbonization of step e) may be carried out at 500 to 1000°C, preferably at 600 to 700°C. If the carbonization temperature is less than 500°C or more than 1000°C, it is undesirable because the shape of the particles may be deformed.

The carbonization may be carried out under an inert atmosphere.

Examples of the present invention will be described in more detail below.

### <Composition of a lithium-ion secondary battery>

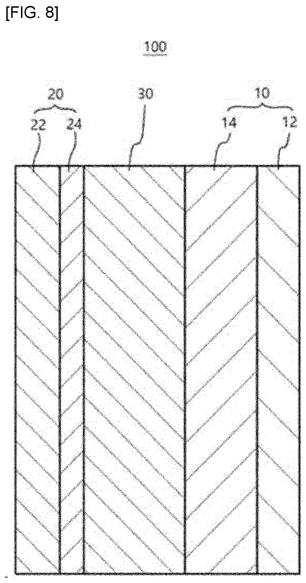

FIG. 8 is a cross-sectional view illustrating a schematic configuration of a lithium-ion secondary battery according to one example of the present invention.

The lithium-ion secondary battery (100) according to one example of the present invention is a so-called lithium-ion secondary battery, which is charged and discharged by the movement of lithium ions between the positive electrode (10) and the negative electrode (20). Specifically, the lithium-ion secondary battery (100) comprises a positive electrode (10), a negative electrode (20), and a solid electrolyte layer (30) disposed between the positive electrode (10) and the negative electrode (20), as shown in FIG. 8.

### (1) Positive electrode

As shown in FIG. 8, the positive electrode (10) includes a positive electrode current collector (12) and a positive electrode active material layer (14) which are disposed in turn toward the negative electrode (20).

The positive electrode current collector (12) may be a plate or foil. The positive electrode current collector (12) may be, for example, one metal or an alloy of two or more metals selected from indium, copper, magnesium, stainless steel, titanium, iron, cobalt, nickel, zinc, aluminum, germanium, and lithium.

The positive electrode active material layer (14) may reversibly adsorb and release lithium ions. The positive electrode active material layer (14) may include a positive electrode active material and a solid electrolyte.

The positive electrode active material may be a compound capable of inserting/removing lithium. Examples of the compounds in which lithium can be inserted or removed include LiₐA_{1-b}B'_{b}D'₂ (wherein 0.90≤a≤1.8, and 0≤b≤0.5); LiₐE₁-_{b}B'_{b}O_{2-c}D'_{c} (wherein 0.90≤a≤1.8, 0≤b≤0.5, and 0≤c≤0.05); LiE_{2-b}B'_{b}O_{4-c}D'_{c} (wherein 0≤b≤0.5, and 0≤c≤0.05); LiₐNi_{1-b-c}Co_{b}B'_{c}D'_{α} (wherein 0.90≤a≤1.8, 0≤b≤0.5, 0≤c≤0.05, and 0<α≤2); LiₐNi_{1-b-c}Co_{b}B'_{c}O_{2-α}F'_{α} (wherein 0.90≤a≤1.8, 0≤b≤0.5, 0≤c≤0.05, and 0<α < 2); LiₐNi_{1-b-c}Mn_{b}B'_{c}D'_{α} (wherein 0.90≤a≤1.8, 0≤b≤0.5, 0≤c≤0.05, and 0<α≤2); LiₐNi_{1-b-c}Mn_{b}B'_{c}O₂₋ₐF'_{α} (wherein 0.90≤a≤1.8, 0≤b≤0.5, 0≤c≤0.05, and 0<α<2); LiₐNi_{b}E_{c}G_{d}O₂ (wherein 0.90≤a≤1.8, 0≤b≤0.9, 0≤c≤0.5, and 0.001≤d≤ 0.1); LiₐNi_{b}Co_{c}Mn_{d}GₑO₂ (wherein 0.90≤a≤1.8, 0≤b≤0.9, 0≤c≤0.5, 0≤d≤0.5, and 0.001≤e≤0.1); LiₐNiG_{b}O₂ (wherein 0.90≤a≤1.8, and 0.001≤b≤0.1); LiₐCoG_{b}O₂ (wherein 0.90≤a≤1.8, and 0.001≤b≤0.1); LiₐMnG_{b}O₂ (wherein 0.90≤a≤1.8, and 0.001≤b≤0.1); LiₐMn₂G_{b}O₄ (wherein 0.90≤a≤1.8, and 0.001≤b≤0.1); QO₂; QS₂; LiQS₂; V₂O₅; LiV₂O₅; Lil'O₂; LiNiVO₄; Li_{(3-f)}J₂(PO₄)₃ (wherein 0≤f≤2); Li_{(3-f)}Fe₂(PO₄)₃ (wherein 0≤f≤2); LiFePO₄; Li₄Ti₅O₁₂(LTO); and any one represented by one of the above formulae.

In the above formulae, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or any combination thereof; G is Al, Cr, Mn, Fe, Mg, La, Ce, Sr, V, or any combination thereof; Q is Ti, Mo, Mn, or any combination thereof; I is Cr, V, Fe, Sc, Y, or any combination thereof; and J is V, Cr, Mn, Co, Ni, Cu, or any combination thereof.

Specific examples of the positive electrode active materials may include lithium cobalt oxide (hereinafter, referred to as LCO), lithium nickel oxide, lithium nickel cobaltate, lithium nickel cobalt aluminum oxide (hereinafter, referred to as NCA), lithium nickel cobalt manganate (hereinafter, referred to as NCM), lithium salts such as lithium manganate and lithium iron phosphate, and lithium sulfide. The positive electrode active material layer (14) may comprise only one selected from such compounds as a positive electrode active material, or may comprise two or more therefrom.

The positive electrode active material may comprise a lithium salt of a transition metal oxide having a layered rock salt structure among the lithium salts described above. Here, the "layered rock salt structure" is a structure in which an oxygen atom layer and a metal atom layer are arranged alternately and regularly in the direction of a cubic rock salt structure, resulting in each atom layer forming a two-dimensional plane. Also, the "cubic rock salt structure" means a sodium chloride-type structure, which is one type of crystal structure. For example, the "cubic rock salt structure" refers to a structure in which face-centered cubic lattices formed by cations and anions, respectively, are arranged with an offset of half the edge length of the unit cell.

Lithium salts of transition metal oxides having such layered rock salt structure may be ternary lithium transition metal oxides, such as, for example, LiNiₓCo_{y}Al_{z}O₂(NCA) or LiNiₓCo_{y}Mn_{z}O₂(NCM) (wherein 0 < x < 1, 0 < y < 1, 0 < z < 1, and x + y + z = 1). The positive electrode active material layer (14) may include a lithium salt of a ternary transition metal oxide having such a layered rock salt structure as a positive electrode active material to improve the energy density and thermal stability of the lithium-ion secondary battery (100).

Here, the shape of the positive electrode active material may be, for example, a particle shape such as spherical, ellipsoidal, etc. In addition, the particle size of the positive electrode active material is not particularly limited and can be in the range applicable to the positive electrode active material of conventional lithium-ion secondary batteries. Furthermore, the content of the positive electrode active material in the positive electrode active material layer (14) is not particularly limited and can be within the range applicable to the positive electrode of conventional lithium-ion secondary batteries.

Of course, it is also possible to use a compound having a coating layer on the surface of the compound, or a mixture of the compound and a compound having a coating layer. The coating layer may include a coating element compound such as an oxide, hydroxide, oxyhydroxide, oxycarbonate, or hydroxycarbonate of the coating element. The compounds that make up these coating layers may be amorphous or crystalline. The coating elements included in the coating layer may be Mg, Al, Co, K, Na, Ca, Si, Ti, V, Sn, Ge, Ga, B, As, Zr, or mixtures thereof. The coating layer formation process can be carried out using any coating method (e.g., spray coating, dipping, etc.) provided that the compound can be coated with these elements in a way that does not adversely affect the properties of the positive electrode active material, which is well understood by those skilled in the art and will not be described in detail.

Specific examples of such coating layers include Li₂O-ZrO₂, for example.

The solid electrolyte included in the positive electrode active material layer (14) may be the same as or different from the solid electrolyte included in the solid electrolyte layer (30) described later.

The positive electrode active material layer (14) may also be a suitable formulation of additives such as conductive agents, binders, fillers, dispersants, or ionic conductivity aids, in addition to the positive electrode active material and solid electrolyte described above.

The conductive agent may be, for example, graphite, carbon black, acetylene black, Ketjen black, carbon fiber, or metal powder. The binder may also include, for example, styrene butadiene rubber (SBR), polytetrafluoroethylene, polyvinylidene fluoride, or polyethylene. As the filler, dispersant, or ionic conductivity aid, any of the known materials conventionally used for electrodes in lithium-ion secondary batteries may be used.

### (2) Negative electrode

The negative electrode (20) may include a negative electrode current collector (22) and a negative electrode active material layer (24) which are disposed in turn toward the positive electrode (10).

The negative electrode current collector (22) can be a plate or foil. The negative electrode current collector (22) may include a material that does not react with lithium, i.e., does not form any of the alloys and compounds with lithium. Materials constituting the negative electrode current collector (22) may include, for example, copper, stainless steel, titanium, iron, cobalt, and nickel. The negative electrode current collector (22) may be composed of one of these metals, or may be composed of an alloy or clad material of two or more metals.

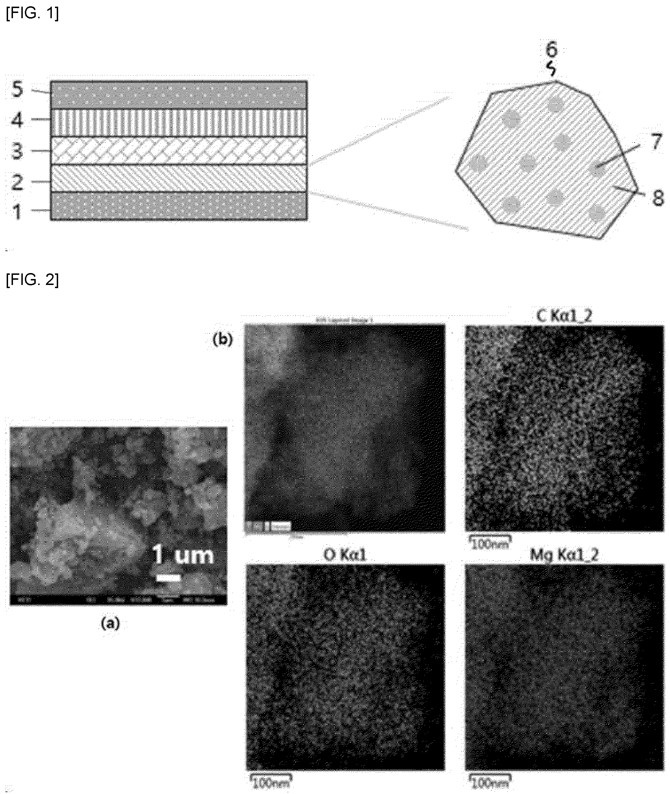

The negative electrode active material layer (24) may not include lithium in the negative electrode current collector (22), in the negative electrode active material layer (24), or between the negative electrode active material layer (24) and the solid electrolyte layer (30) in an initial state or in a state after a full discharge. As will be described later, when the lithium-ion secondary battery (100) according to one example is overcharged, the active material contained in the negative electrode active material layer (24) and the lithium ions that have migrated from the positive electrode (10) may form an alloy or compound, and a metal layer (26) main composed of lithium may be formed (deposited) on the negative electrode (20), as shown in FIG. 2. The metal layer (26) may be deposited between the negative electrode current collector (22) and the negative electrode active material layer (24), within the negative electrode active material layer (24), or in both regions. Between the negative electrode current collector layer (22) and the negative electrode active material layer (24), the metal layer (26) main composed of lithium may be disposed closer to the negative electrode current collector layer (22) than the negative electrode active material layer (24).

The negative electrode active material layer (24) may include carbon material particles, metal particles, and metal oxide particles, and binders, in addition to the Mg(O)/C composite described above. By including the binder, the negative electrode active material layer (24) can be stabilized on the negative electrode current collector (22). The material which makes up the binder may be, for example, a resin material such as styrene butadiene rubber (SBR), polytetrafluoroethylene, polyvinylidene fluoride (PVDF), polyethylene, or the like. The binder may comprise one or more selected from such resin materials.

The negative electrode active material layer (24) may also be suitably formulated with additives used in conventional lithium-ion secondary batteries, such as fillers, dispersants, ion conductors, and the like. Specific examples of the additives are the same as described above for the positive electrode.

The overall thickness of the negative electrode active material layer (24) is not particularly limited, but may be 1 µm to 100 µm, or 10 µm to 60 µm. If the thickness of the negative electrode active material layer (24) is less than 1 µm, the performance of the lithium-ion secondary battery may not be sufficiently improved. If the thickness of the negative electrode active material layer (24) exceeds 100 µm, the resistance of the negative electrode active material layer (24) may be high, and as a result, the performance of the lithium-ion secondary battery may not be sufficiently improved. By using the binder described above, the thickness of the negative electrode active material layer (24) can be easily secured to an appropriate level.

Meanwhile, the negative electrode current collector (22) may further comprise a film comprising a material capable of forming an alloy or compound with lithium, wherein the film can be disposed between the negative electrode current collector (22) and the negative electrode active material layer.

The negative electrode current collector (22) does not react with lithium metal, but may make it difficult to deposit a smooth lithium metal layer on top thereof. The film may also be used as a wetting layer to cause the lithium metal to be deposited flatly on top of the negative electrode current collector (22).

Materials capable of forming an alloy with the lithium metal used in the film may include silicon, magnesium, aluminum, lead, silver, tin, or combinations thereof. Materials capable of forming a compound with the lithium metal used in the film may include carbon, titanium sulfide, iron sulfide, or combinations thereof. The content of the material used in the film may be a small amount, within a range that does not affect the electrochemical properties and/or the redox potential of the electrode. The film may be applied flatly on the negative electrode current collector (22) to prevent cracking during the charging cycle of the lithium-ion secondary battery (100). The application of the film may be performed by physical deposition, such as evaporation or sputtering, chemical deposition, or plating.

The thickness of the film may be 1 nm to 500 nm. The thickness of the film may be, for example, 2 nm to 400 nm. The thickness of the film may be, for example, 3 nm to 300 nm. The thickness of the film may be, for example, 4 nm to 200 nm. The thickness of the film may be, for example, 5 nm to 100 nm.

### (3) Solid electrolyte layer

The solid electrolyte layer (30) is disposed between the positive electrode (10) and the negative electrode (20) (e.g., between the positive electrode active material layer (14) and the negative electrode active material layer (24)). The solid electrolyte layer (30) includes a solid electrolyte capable of migrating ions. The solid electrolyte layer (30) may comprise a sulfide-based solid electrolyte.

The sulfide-based solid electrolyte may comprise Li₂S-P₂S₅, Li₂S-P₂S₅-LiX (wherein X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is one of Ge, Zn or Ga), Li₂S-GeS₂, Li₂S-SiS₂-Li₃PO₄, Li₂S-SiS₂-LiₚMO_{q} (wherein p and q are positive numbers, and M is one of P, Si, Ge, B, Al, Ga or In), or any combination thereof. The solid electrolyte may comprise one material selected from such sulfide-based solid electrolyte materials, or may comprise two or more materials selected therefrom.

The sulfide-based solid electrolyte may include a solid electrolyte represented by Formula 1 below:

<Formula 1> LiₓM'_{y}PS_{z}A_{w}

wherein x, y, z and w are independently between 0 to 6, inclusive;
M' is at least one of As, Ge, Ga, Sb, Si, Sn, Al, In, Ti, V, Nb, or Ta; and
A is at least one of F, Cl, Br, or I.

As the solid electrolyte, a sulfide-based solid electrolyte material comprising sulfur (S), phosphorus (P) and lithium (Li) as a component can be utilized. For example, a material containing Li₂S-P₂S₅ can be used. When utilizing a material comprising Li₂S-P₂S₅ as a sulfide-based solid electrolyte material, the mixing molar ratio of Li₂S and P₂S₅ may be selected in the range of, for example, 50:50 to 90:10.

Also, the solid electrolyte may be in an amorphous phase or a crystalline phase. It may also be in a mixed state of amorphous and crystalline phases.

The solid electrolyte layer (30) may further comprise a binder (binding agent). Examples of the binder (binding agent) materials may include resins such as styrene butadiene rubber (SBR), polytetrafluoroethylene, polyvinylidene fluoride, polyethylene, polyacrylic acid, and the like. The binder (binding agent) material may be the same as the material constituting the binder in the positive electrode active material layer (14) and the negative electrode active material layer (24), or may be different therefrom.

### (4) Composition of a lithium-ion secondary battery

The lithium-ion secondary battery (100) of the present invention may be a lithium-ion secondary battery (100) comprising a positive electrode (10), a solid electrolyte layer (30), and a negative electrode (20), in that order, as shown in FIG. 8.

### <Method for preparing a lithium-ion secondary battery>

Next, a method for manufacturing the lithium-ion secondary battery (100) will be described. The lithium-ion secondary battery (100) according to one example can be obtained by fabricating a positive electrode (10), a negative electrode (20), and a solid electrolyte layer (30), respectively, and then laminating each layers.

### (1) Process of manufacturing a positive electrode

An example of the process of manufacturing a positive electrode is as follows. First, the materials constituting the positive electrode active material layer (14) (a positive electrode active material, a binder (binding agent), etc.) are added to a non-polar solvent to form a slurry (or paste). The obtained slurry is then applied to the prepared positive electrode current collector (12). This is dried to obtain a laminate. The obtained laminate is then pressurized, for example, using hydrostatic pressure, to obtain the positive electrode (10). In this case, the pressurization process may be omitted.

### (2) Process of manufacturing a negative electrode

An example of the process of manufacturing a negative electrode is as follows. First, the materials constituting the negative electrode active material layer (24) are added to a polar solvent or a non-polar solvent to prepare a slurry (or paste). The obtained slurry is then applied to the prepared negative electrode current collector (22) to form a negative electrode active material layer.

If the negative electrode active material layer further comprises one or more additional layers, the additional layers may be stacked in the same manner as above.

The laminate obtained by the above method is then pressurized, for example, using hydrostatic pressure, to produce the negative electrode (20). Also, the pressurization process can be omitted. Furthermore, the method of applying the slurry to the negative electrode current collector (22) is not particularly limited, and may include, for example, screen printing, metal mask printing, electrostatic painting, dip coating, spray coating, roll coating, doctor blade, gravure coating, and the like.

The method of forming a negative electrode active material layer in two layers was described above, but even when forming additional layers, a negative electrode can be prepared by preparing a slurry to form each layer and sequentially stacking each layer according to the stacking order using the method described above.

### (3) Process of manufacturing a solid electrolyte layer

The solid electrolyte layer (30) can be fabricated by a solid electrolyte including, for example, a sulfide-based solid electrolyte material.

First, the starting material (e.g., Li₂S, P₂S₅, etc.) is processed by melt quenching or mechanical milling to obtain a sulfide-based solid electrolyte material. For example, when using a melt quenching method, a sulfide-based solid electrolyte material can be prepared by mixing a predetermined amount of starting materials, pelletizing them, reacting them at a predetermined reaction temperature in a vacuum, and quenching them. Further, the reaction temperature of the mixture of Li₂S and P₂S₅ may be 400°C to 1000°C, for example, 800°C to 900°C. Furthermore, the reaction time may be 0.1 to 12 hours, for example, 1 to 12 hours. Further, the quenching temperature of the reaction mixture may be 10°C or less, for example, 0°C or less, and the quenching rate may be typically 1°C/sec to 10000°C/sec, for example, 1°C/sec to 1000°C/sec.

In addition, when mechanical milling is used, a sulfide-based solid electrolyte material can be prepared by stirring and reacting the starting materials using a ball mill or the like. In addition, the stirring speed and stirring time of the mechanical milling method are not particularly limited, but the faster the stirring speed, the faster the sulfide-based solid electrolyte material can be produced, and the longer the stirring time, the higher the conversion rate of raw materials into sulfide-based solid electrolyte materials.

The obtained mixed raw material (sulfide-based solid electrolyte material) is then heat-treated at a predetermined temperature, and then crushed to produce a particle-shaped solid electrolyte. When the solid electrolyte has a glass transition point, it may undergo a phase change from an amorphous state to crystalline state through heat treatment.

Subsequently, the solid electrolyte obtained by the above method may be formed into a solid electrolyte layer (30) by film formation using known techniques such as an aerosol deposition, cold spray, or sputtering. Additionally, the solid electrolyte layer (30) may be prepared by pressurizing solid electrolyte particles. Furthermore, the solid electrolyte layer (30) can be prepared by mixing a solid electrolyte with a solvent and a binder, and applying, drying and pressurizing them.

### (4) Laminating process

A lithium-ion secondary battery (100) according to one example can be obtained by disposing a solid electrolyte layer (30) between the positive electrode (10) and the negative electrode (20) and pressurizing it, for example, using hydrostatic pressure.

The lithium-ion secondary battery (100) of the present invention uses an end plate, and does not require high external pressure to be applied, and can provide improved discharge capacity even if the external pressure applied to the positive electrode (10), the negative electrode (20), and the solid electrolyte layer (30) is 1 MPa or less when used.

### <Method of charging a lithium-ion secondary battery>

Next, a method for charging the lithium-ion secondary battery (100) will be described.

The method of charging the lithium-ion secondary battery (100) according to one example may involve charging the battery beyond the charge capacity of the negative electrode active material layer (24), i.e., overcharging.

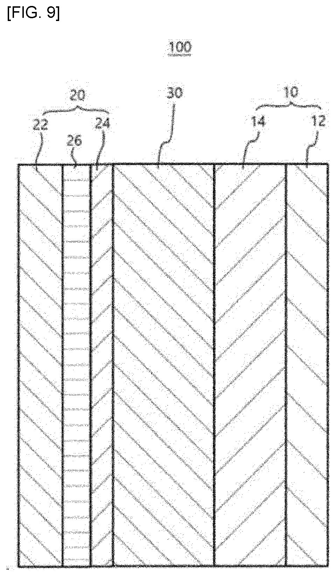

In the early stage of charging, lithium may be adsorbed within the negative electrode active material layer (24). When the battery is charged beyond the charge capacity of the negative electrode active material layer (24), lithium may be deposited on the back side of the negative electrode active material layer (24), i.e., between the negative electrode current collector (22) and the negative electrode active material layer (24), as shown in FIG. 9, and a metal layer (26) that was not present during manufacture may be formed by deposited lithium. During discharge, lithium in the negative electrode active material layer (24) and metal layer (26) can be ionized and moved to the positive electrode (10) side. Therefore, in the lithium-ion secondary battery (100) of the present invention, lithium can be used as the negative electrode active material. In addition, since the negative electrode active material layer (24) coats the metal layer (26), it can function as a protective layer for the metal layer (26) and inhibit deposition and growth of dendritic metallic lithium. In this way, short circuits and capacity degradation of the lithium-ion secondary battery (100) may be suppressed, and furthermore, the characteristics of the lithium-ion secondary battery (100) may be improved. Furthermore, according to one example, the metal layer (26) is not pre-formed, which can reduce the manufacturing cost of the lithium-ion secondary battery (100).

Further, the metal layer (26) is not limited to those formed between the negative electrode current collector (22) and the negative electrode active material layer (24) as shown in FIG. 9, but may also be formed on the interior of the negative electrode active material layer (24). Additionally, the metal layer (26) may be formed both between the negative electrode current collector (22) and the negative electrode active material layer (24) and inside the negative electrode active material layer (24).

The lithium-ion secondary battery (100) of the present invention may be configured as a unit cell having a positive electrode/separator/negative electrode structure, a bicell having a positive electrode/separator/negative electrode/separator/positive electrode structure, or a stacked cell structure in which the unit cell configuration is repeated.

The shape of the lithium-ion secondary battery (100) of the present invention is not particularly limited and may include, for example, a coin type, button type, sheet type, stacked type, cylindrical type, flat type, or prismatic type. It can also be applied to large-scale batteries used in electric vehicles. For example, the lithium-ion secondary battery (100) can also be used in hybrid vehicles, such as plug-in hybrid electric vehicles (PHEVs). It can also be used in applications that require large amounts of power storage. For example, it could be used for electric bikes or power tools.

### [Mode for Practicing the Invention]

Hereinafter, the present invention will be described with reference to examples to illustrate the invention in detail. However, examples according to the present invention may be modified in many other ways, and the scope of the present invention should not be construed as being limited to the examples described below. The examples of the present invention are provided to more fully illustrate the invention to one of ordinary skill in the art.

### Example 1: Manufacturing of a lithium-ion secondary battery

### (1) Preparation of Mg-MOF-74

1.4 g of magnesium nitrate hexahydrate (Mg(NO₃)₂.6H₂O) and 0.337 g of 2,5-dihydroxyterephthalic acid, were dissolved in 153 ml of a solution in which dimethylformamide, ethanol, and water were mixed in a volume ratio of 15:1:1. Subsequently, a 10% aqueous solution of NaOH was slowly added to adjust the pH to 9.5, followed by mixing for 1 hour and sealing, and then the mixture was heat treated in a calcination furnace at 125°C for 26 hours. The reaction mixture was then added to methanol and the resulting precipitate was vacuum dried to obtain Mg-MOF-74.

### (2) Preparation of a Mg(O)/C composite

The Mg-MOF-74 obtained in step (1) was heat treated at 600°C for 6 hours under an argon gas atmosphere to prepare a Mg(O)/C composite. The particle size of the Mg(O)/C composite prepared above was 50 nm. Furthermore, the weight ratio of Mg:C in the Mg(O)/C composite was 1:1.5.

### (3) Preparation of a negative electrode

The binder solution was prepared by mixing polyvinylidene fluoride (PVDF) with n-methylpyrrolidone (NMP) solvent. Next, the Mg(O)/C composite prepared in Example 1 was mixed with carbon black in a 1:1 weight ratio, and mixed with the binder solution. At this time, the PVDF was mixed in an amount of 7 parts by weight based on 100 parts by weight of the combined Mg(O)/C composite and carbon black.

The mixture was stirred with a thinky mixer to control the viscosity. After adjusting the viscosity, 2 mm zirconia ball was added and stirred again with the above mixer to make a slurry.

The slurry was coated on a stainless steel (SUS) foil and vacuum dried at 100°C to produce a negative electrode with a 10 µm thick negative electrode active material layer.

### (4) Manufacturing of a positive electrode

LiNi_{0.8}Co_{0.1}Mn_{0.1}O₂(NCM) as the positive electrode active material, Li₆PS₅Cl as the argyrodite-type solid electrolyte, carbon nanofiber (CNF) as the conductive material, and polytetrafluoroethylene (PTFE) as the binder were mixed. The mixing weight ratio of the positive electrode active material, solid electrolyte, conductive material, and binder was 80:18:1:1. After mixing this mixture with a blender, a dry sheet was prepared using a roll press. Next, the dry sheet was bonded to the aluminum current collector to produce a positive electrode with a 150 µm thick positive electrode layer.

### (5) Manufacturing of a solid electrolyte

n-butylyl butylate (NBB) was added as a binder solution to the argyrodite-type solid electrolyte Li₆PS₅Cl, and they were mixed. At this point, the mixture was stirred with a thinky mixer to control the viscosity. After adjusting the viscosity, 2 mm zirconia ball was added and stirred again with the above mixer to make a slurry. The slurry was cast onto a release PET film and dried at room temperature to prepare a solid electrolyte.

### (6) Manufacturing of a lithium-ion secondary battery

The positive electrode prepared as above was cut into a square size of 4 cm², the solid electrolyte prepared as above was cut into a square size of 5.76 cm², and the negative electrode prepared as above was cut into a square size of 4.84 cm², and they were stacked to prepare a lithium-ion secondary battery.

### Example 2: Manufacturing of a lithium-ion secondary battery

The lithium-ion secondary battery was prepared in the same manner as Example 1 except that the pH was adjusted to 10 in the step of "(1) Preparation of Mg-MOF-74" in Example 1.

The particle size of the prepared Mg(O)/C composite was 50 nm, and it was used for the fabrication of the negative electrode.

### Comparative Example 1: Manufacturing of a lithium-ion secondary battery

The lithium-ion secondary battery was prepared in the same manner as Example 1 except that the pH was adjusted to 8.5 in the step of "(1) Preparation of Mg-MOF-74" in Example 1.

The particle size of the prepared Mg(O)/C composite was 5 µm, and it was used for the fabrication of the negative electrode.

### Comparative Example 2: Manufacturing of a lithium-ion secondary battery

The lithium-ion secondary battery was prepared in the same manner as Example 1, except that dimethylformamide, ethanol, and water were mixed in a 38:1:1 volume ratio in the step of "(1) Preparation of Mg-MOF-74" in Example 1, rather than in a 15:1:1 volume ratio.

The particle size of the prepared Mg(O)/C composite was 15 µm, and it was used for the fabrication of the negative electrode.

### Comparative Example 3: Manufacturing of a lithium-ion secondary battery

The lithium-ion secondary battery was prepared in the same manner as Example 1, except that 0.674 g of 2,5-dihydroxyterephthalic acid was used in the step of "(1) Preparation of Mg-MOF-74" in Example 1, rather than 0.337 g of 2,5-dihydroxyterephthalic acid.

The particle size of the prepared Mg(O)/C composite was 20 µm, and it was used for the fabrication of the negative electrode.

### Comparative Example 4: Manufacturing of a lithium-ion secondary battery

The lithium-ion secondary battery was prepared in the same manner as Example 1, except for heat treatment for 16 hours in the calcination furnace the step of "(1) Preparation of Mg-MOF-74" in Example 1, rather than for 26 hours.

The particle size of the prepared Mg(O)/C composite was 10 µm, and it was used for the fabrication of the negative electrode.

### Comparative Example 5: Manufacturing of a lithium-ion secondary battery

The lithium-ion secondary battery was prepared in the same manner as Example 1, except that using 460 ml of a solution in which dimethylformamide, ethanol, and water was mixed in a 15:1:1 volume ratio in the step of "(1) Preparation of Mg-MOF-74" in Example 1, rather than using 153 ml of the solution.

The particle size of the prepared Mg(O)/C composite was 2 µm, and it was used for the fabrication of the negative electrode.

### Comparative Example 6: Manufacturing of a lithium-ion secondary battery

The lithium-ion secondary battery was prepared in the same manner as Example 1, except that instead of using a mixture of a Mg(O)/C composite and carbon black in a 1:1 weight ratio in the step of "(3) Preparation of a negative electrode" of Example 1, the Mg(O)/C composite was not used and twice the amount of carbon black was used.

### Experimental Example 1: Evaluation of the discharge capacity of a lithium-ion secondary battery

The lithium-ion secondary batteries prepared in Examples 1 and 2, and Comparative Examples 1 to 6 were operated in a voltage range of 2.5 V to 4.3 V at 60°C, and their discharge capacities were evaluated.

**[Table 1]**

| Battery | Discharge capacity (mAh/g) | |
|---|---|---|
| | 0.1 C | 0.2 C |
| Example 1 | 190.2 | 188.7 |
| Example 2 | 189.5 | 188.4 |
| Comparative Example 1 | 184.5 | 168.1 |
| Comparative | 179.2 | 159.9 |

| | | |
|---|---|---|
| Example 2 | | |
| Comparative Example 3 | 180.5 | 161.6 |
| Comparative Example 4 | 182.4 | 163.5 |
| Comparative Example 5 | 186.1 | 164.7 |
| Comparative Example 6 | 188.5 | 178.3 |

### Experimental Example 2: Evaluation of the discharge capacity retention and charge/discharge efficiency of a lithium-ion secondary battery

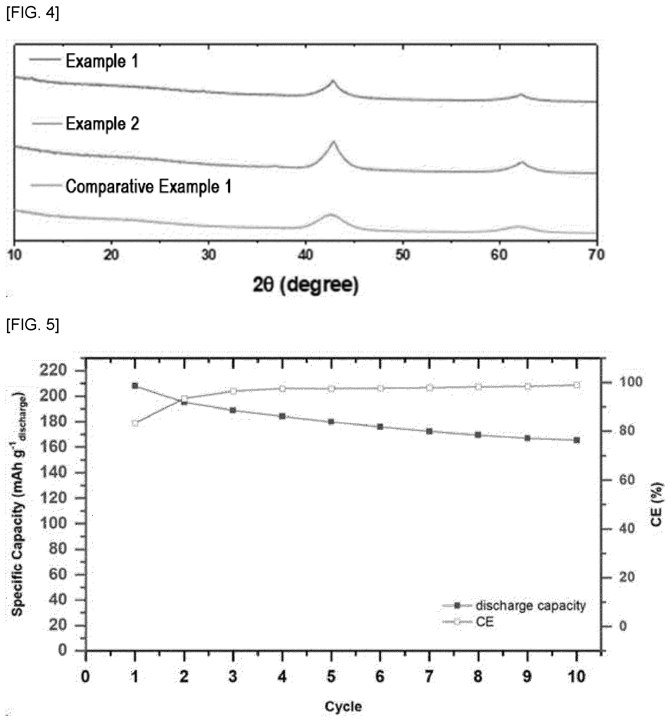

The discharge capacity retention rate and charge/discharge efficiency of the secondary battery prepared in Example 1 were measured by CC charging and CC discharging at 0.2C in a voltage range of 2.5V to 4.3V at 60°C, and the results are shown in FIG. 5.

### Experimental Example 3: Verification of the activity of Mg(O)/C composite distinct from non-graphitic carbon-based active materials

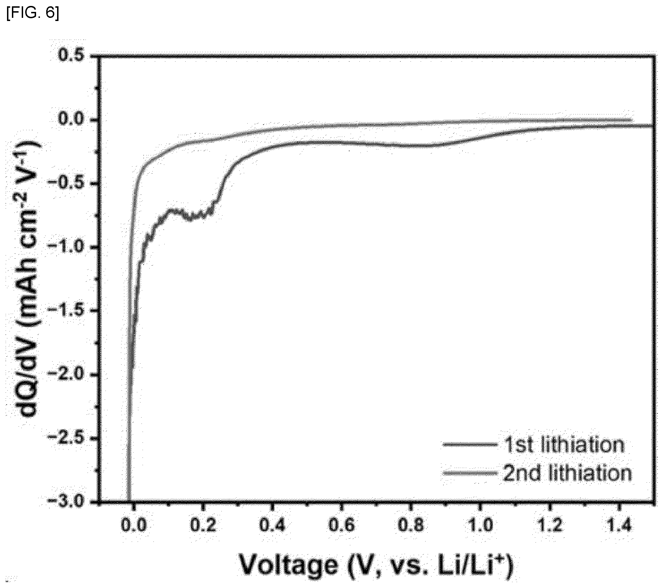

The Mg(O)/C composite prepared in Example 1 was used to construct the negative electrode, and lithium metal was used as the counter electrode and pelletized to prepare a half-cell. The activity of the Mg(O)/C composite was measured by CC-charging and CC-discharging the half-cell at a current of 0.1C in a voltage range of 0V to 1.5V. The result of the activity verification is shown in FIG. 6. As shown in FIG. 6, the Mg(O)/C composite of the present invention exhibited activity distinct from non-graphite based active materials.

### [Reference Numerals]

1: Negative electrode current collector
2: Negative electrode active material layer
3: Solid electrolyte layer
4: Positive electrode active material layer
5: Positive electrode current collector
6: Mg(O)/C composite
7: Mg or MgO nanoparticles
8: Carbon structure

## Claims

1. A negative electrode material comprising a Mg(O)/C composite which is a carbide of the Mg-MOF-74 (magnesium-based metal-organic framework-74), wherein O is present or absent.

2. The negative electrode material according to claim 1,
wherein the weight ratio of Mg to C in the Mg(O)/C composite is 1 : 0.5 to 10.

3. The negative electrode material according to claim 1,
wherein the weight ratio of MgO to C in the Mg(O)/C composite is 1 : 0.25 to 5.

4. The negative electrode material according to claim 3,
wherein, when Mg and MgO are included together in the Mg(O)/C composite, the weight ratio thereof is 1 : 0.25 to 8.

5. A negative electrode comprising a negative electrode active material layer comprising 35 to 60% by weight negative electrode material according to claim 1, 35 to 60% by weight conductive material, and 3 to 15% by weight binder.

6. A lithium-ion secondary battery comprising a negative electrode according to claim 5; a positive electrode; and an electrolyte disposed between the negative electrode and positive electrode.

7. The lithium-ion secondary battery according to claim 6,
wherein the electrolyte comprises a sulfide-based solid electrolyte.

8. The lithium-ion secondary battery according to claim 7,
wherein the lithium-ion secondary battery is an anodeless battery.

9. A method of preparing a Mg(O)/C composite, comprising:
a) preparing a solution by dissolving a magnesium precursor and 2,5-dihydroxyterephthalic acid in a solvent;
b) adjusting the pH of the solution to 9 to 11;
c) heat treating the solution at 110 to 140°C;
d) drying the solids produced after the heat treatment to prepare Mg-MOF-74; and
e) carbonizing the Mg-MOF-74 at 500 to 1000°C.

10. The method of preparing a Mg(O)/C composite according to claim 9,
wherein the magnesium precursor is one or more selected from the group consisting of magnesium nitrate hexahydrate (Mg(NO₃)₂.6H₂O), magnesium nitrate dihydrate (Mg(NO₃)₂.2H₂O), magnesium nitrate (Mg(NO₃)₂), and magnesium hydroxide (Mg(OH)₂).

11. The method of preparing a Mg(O)/C composite according to claim 9,
wherein the 2,5-dihydroxyterephthalic acid is used in an amount of 200 to 300 parts by weight based on 100 parts by weight of magnesium contained in the magnesium precursor.

12. The method of preparing a Mg(O)/C composite according to claim 9,
wherein the solvent is a mixture of dimethylformamide, ethanol, and water in a weight ratio of 10 to 25:0.5 to 2:1.

13. The method of preparing a Mg(O)/C composite according to claim 9,
wherein the heat treatment of step c) is carried out for 18 to 30 hours.

14. The method of preparing a Mg(O)/C composite according to claim 12,
wherein the solvent is used in an amount 30 to 300 times by weight based on the combined weight of the magnesium precursor and 2,5-dihydroxyterephthalic acid.
